# FASCICULE DE BREVET EUROPEEN

(11) **EP 0 986 706 B1**
(45) Date de publication et mention de la délivrance du brevet: **12.03.2003**
(21) Numéro de dépôt: 97943948.6
(22) Date de dépôt: 06.10.1997
(51) Int. Cl.: F02M 21/06

(54) **SYSTEME DE VAPORISATEUR DE GAZ DE PETROLE LIQUEFIE CHAUFFE PAR L'HUILE DE GRAISSAGE DU MOTEUR**
FLÜSSIGGASVERDAMPFUNGSSYSTEM ERWÄRMT DURCH MOTORSCHMIERÖL
SYSTEM FOR VAPORISING LIQUEFIED PETROL GAS HEATED BY ENGINE LUBRICATING OIL

(30) Priorité: 03.06.1997 FR 9707071
(43) Date de publication de la demande: 22.03.2000
(73) Titulaire: Di Gennaro, Antoine, 83000 Toulon (FR); Porta, Michel, 83400 Hyères (FR)
(72) Inventeur: Di Gennaro, Antoine, 83000 Toulon (FR); Porta, Michel, 83400 Hyères (FR)
(86) Numéro de dépôt international: FR9701773
(87) Numéro de publication internationale: WO98055758

(56) Documents cités:
- DE-A- 3 840 622
- DE-A- 4 244 328
- DE-C- 3 044 744
- PATENT ABSTRACTS OF JAPAN vol. 17, no. 294 (M-1424), 17 juin 1993 & JP 05 018322 A (KUBOTA CORP), 26 janvier 1993,

## Description

La présente invention a pour objet un système de vaporisation de gaz de pétrole liquéfié chauffé par l'huile de graissage du moteur, selon la revendication 1.

Il a pour objet l'alimentation au moyen de gaz de pétrole liquéfié (G.P.L.) de moteurs à explosion recevant normalement un carburant liquide.

Il peut convenir à tous les types de moteurs à combustion internes de type à carburateur et injection, que ce soit des moteurs fixes, ou des moteurs de véhicules terrestres ou de bateaux.

Le gaz de pétrole liquéfié est de plus en plus utilisé comme source d'énergie pour les véhicules à moteurs. Ce carburant présente en effet des avantages très intéressants, en tête desquels il faut citer une très faible pollution et une taxation avantageuse pratiquée par de nombreux pays et permettant une diminution sensible du prix de revient kilométrique.

L'emploi de gaz liquéfié pour faire fonctionner un moteur initialement conçu pour recevoir un carburant liquide nécessite l'utilisation d'un dispositif spécifique assurant la vaporisation du gaz sous une pression et avec un débit déterminés.

Le document JP-A-05018322 décrit par example un système selon le préambule de la revendication 1.

Ce dispositif se présente sous la forme d'un boîtier, généralement réalisé en fonte de métal léger tel que l'aluminium, et comportant une double enceinte formée d'une chambre de vaporisation du gaz et d'une chambre thermique dans laquelle circule un liquide chaud qui est généralement constitué par l'eau de refroidissement du moteur voir par example DE-A-3044744 prélevée grâce à une dérivation pratiquée sur le circuit reliant celui-ci au radiateur. Les deux chambres ont une paroi commune agencée pour permettre une bonne transmission des calories.

Pour certains types de moteurs tels que les moteurs à refroidissement par air ou les moteurs marins à refroidissement par eau de mer, il est difficile, voire impossible, d'utiliser le fluide de refroidissement pour assurer l'apport de calories nécessaires à la vaporisation du gaz liquéfié.

En outre, l'eau de refroidissement met un temps assez long pour atteindre la température nécessaire pour vaporiser le gaz liquéfié, en particulier par temps froid, ce qui impose un fonctionnement à l'essence durant la période de démarrage, période qui peut se prolonger pendant de longues minutes. De plus, l'apport d'énergie diminue fortement lorsque le moteur fonctionne au ralenti obligeant fréquemment l'utilisateur à basculer sur l'alimentation en essence lorsqu'il roule en ville ou se trouve pris dans des embouteillages.

La demande de brevet N° FR 97 01 705 déposée par les mêmes inventeurs décrit un boîtier de vaporisation du gaz liquéfié comportant, à l'intérieur de la chambre thermique, un corps de chauffe constitué d'une résistance électrique contrôlée par un thermostat et raccordée au circuit électrique du moteur ou à une source externe, la chambre thermique étant préférentiellement remplie d'un produit liquide ou pâteux bon conducteur de la chaleur apte à transmettre les calories du liquide chaud à la chambre de vaporisation.

Les essais effectués avec ce dispositif ont montrés qu'il est très difficile, par ce moyen, de produire une quantité d'énergie suffisante avec un boîtier de vaporisation standard et que pour fonctionner correctement, il faudrait avoir recours à un appareil surdimensionné et à une source de courant plus puissante que celle que l'on trouve habituellement sur les véhicules courants.

Le dispositif selon la présente invention supprime tous ces inconvénients. En effet, il permet d'obtenir, avec un boîtier standard une mise en service très rapide de l'alimentation en gaz liquéfié au démarrage, peut fonctionner correctement même lorsque le moteur tourne à très bas régime et est utilisable avec tous les types de moteurs à explosion à graissage par circulation d'huile, quel que soit son système de refroidissement. Par ailleurs, il joue le rôle de radiateur d'huile et peut permettre la suppression de ce dispositif dans certains cas.

Il est constitué d'un boîtier de vaporisation du gaz liquéfié dont la chambre thermique est raccordée en dérivation, par une double canalisation, au circuit de graissage du moteur, par l'intermédiaire d'un bloc de raccordement se montant à la base du filtre à huile et utilisé normalement sur certains moteurs pour les radiateurs de refroidissement du fluide de lubrification.

Sur les dessins annexés, donnés à titre d'exemples non limitatifs de formes de réalisation de l'objet de l'invention:
la figure 1 représente un dispositif de vaporisation de gaz liquéfié fermé, vu du côté de la chambre thermique,
la figure 2 est une coupe transversale suivant les flèches A-A de 1a figure 1,
la figure 3 représente, dans les mêmes conditions que sur la figure 1, un dispositif de vaporisation équipé d'une résistance électrique pour chauffage d'appoint,
la figure 4 est une coupe transversale suivant les flèches B-B de la figure 3,
la figure 5 représente schématiquement le montage du dispositif sur un moteur
et la figure 6 est un schéma montrant un exemple d'installation du système sur un bateau.

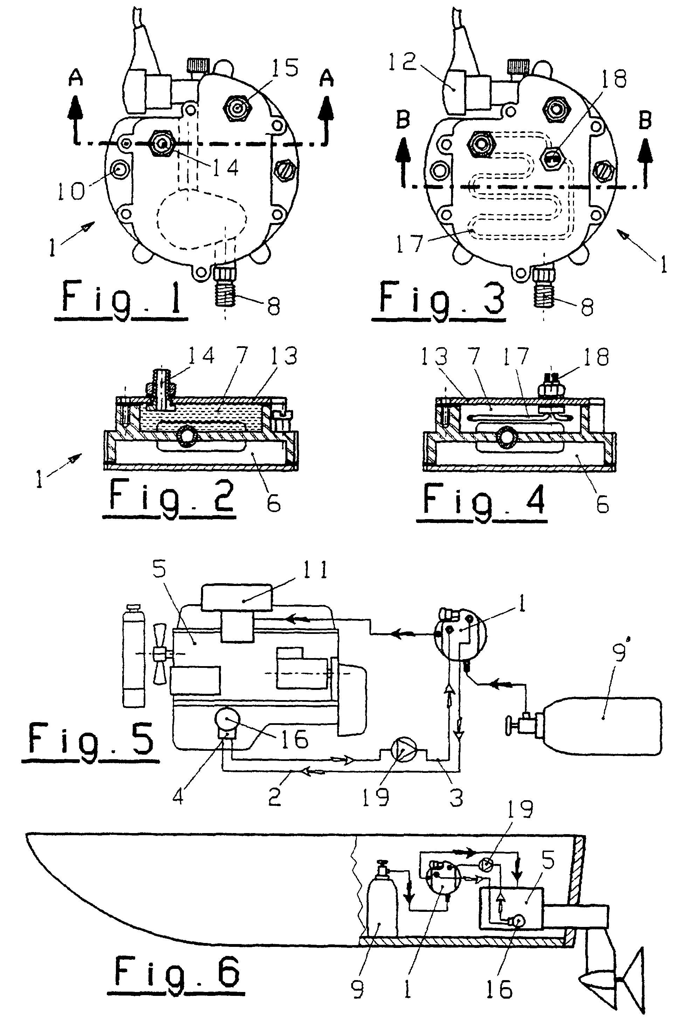

Le montage figures 1 à 6, est constitué d'un boîtier 1 de vaporisation de gaz de pétrole liquéfié 1 raccordé par une double tubulure 2, 3 souple à un élément de dérivation 4 permettant de faire passer la circulation de l'huile de graissage à l'extérieur du moteur 5.

Le boîtier 1 comporte une chambre de vaporisation 6 et une chambre thermique 7 contiguës et séparées par une paroi commune. La chambre de vaporisation comporte la cavité d'évaporation proprement dite, ainsi que l'ensemble des mécanismes de contrôle de la pression et du débit de gaz.
La cavité d'évaporation est reliée par des tubulures internes d'une part à l'arrivée de gaz 8 raccordée au réservoir 9 de gaz liquéfié et, d'autre part, à la sortie de gaz 10 raccordée au carburateur 11 du moteur 5. Le circuit de gaz est contrôlé par une électrovanne 12.

La chambre thermique 7 est pourvue d'un couvercle 13 sur lequel sont montés les raccords 14, 15 d'arrivée et de départ d'huile sur lesquels sont branchées, à l'extérieur, des canalisations souples 2, 3 reliées à l'élément de dérivation 4. Cet élément, utilisé sur certains moteurs pour les radiateurs de refroidissement du fluide de lubrification, est constitué d'un bloc de fonte se montant à la base du filtre à huile 16 et comportant deux raccords communicants respectivement avec le carter du moteur et ledit filtre à huile.

Afin de pouvoir apporter un supplément d'énergie calorifique lorsque le besoin s'en fait sentir, la chambre thermique 7 pourra avantageusement être équipée en variante d'une résistance électrique 17 interne raccordée à une source de courant pouvant être la batterie du véhicule par l'intermédiaire d'un connecteur 18 monté sur le couvercle 13.
Cette résistance sera de préférence de type blindée et fixée à la surface intérieure du couvercle afin de faciliter son montage et son démontage. Elle pourra cependant être de n'importe quel type et être montée dans la chambre thermique selon toute technique adéquate. De même le connecteur 17 pourra être disposé directement sur une partie quelconque du boîtier 1 ou être remplacé par tout autre système d'alimentation électrique.
La mise en et hors service de la résistance sera de préférence assurée par un thermostat monté en dérivation sur l'alimentation électrique contrôlant la température de la chambre thermique. Ce thermostat pourra se trouver aussi bien à l'extérieur qu'à l'intérieur du boîtier 1.

Dans le but d'améliorer l'efficacité du système, le circuit constitué par la double tubulure 2, 3 assurant la circulation de l'huile de graissage du moteur vers la chambre thermique 7 peut avantageusement comporter une pompe 19 de type électrique, mécanique, à engrenage ou autre destinée à accélérer le flux d'huile. Cette pompe peut être et éventuellement être directement entraînée par lui, au moyen d'une courroie par exemple.

Le positionnement des divers éléments constitutifs donne à l'objet de l'invention un maximum d'effets utiles qui n'avaient pas été, à ce jour, obtenus par des dispositifs similaires.

## Revendications

1. Système de vaporisation de gaz liquéfié chauffé par l'huile de graissage du moteur, ayant pour objet l'alimentation au moyen de gaz de pétrole liquéfié (G.P.L.) de moteurs à explosion recevant normalement un carburant liquide et pouvant être adapté à tous les types de moteurs à combustion internes de type à carburateur et injection comportant un graissage par circulation d'huile, ledit système comportant un boîtier (1) de vaporisation constitué d'une chambre thermique (7) et d'une chambre de vaporisation (6) reliée au réservoir (9) de gaz liquéfié et au carburateur (11) du moteur (5),
**caractérisé en ce que** le chauffage de la chambre thermique (7) est assuré en combinaison, d'une part, au moyen d'une double tubulure (2, 3) raccordée en dérivation au circuit d'huile de graissage du moteur (5) et, d'autre part par une résistance électrique (17) interne fixée à la surface intérieure du couvercle (13) de là chambre thermique, ladite résistance, reliée à une source de courant par l'intermédiaire d'un connecteur (18) monté sur ledit couvercle, étant apte à apporter un supplément d'énergie calorifique lorsque cela est nécessaire.

2. Système de vaporisation de gaz liquéfié selon la revendication 1, se caractérisant par le fait que la. source de courant alimentant la résistance électrique (17) est constituée par la batterie du véhicule.

3. Système de vaporisation de gaz liquéfié selon l'une quelconque des revendications précédentes, se caractérisant par le fait que la mise en et hors service de la résistance électrique (17) est assurée par un thermostat monté en dérivation sur l'alimentation électrique et contrôlant la température de la chambre thermique (7).

4. Système de vaporisation de gaz liquéfié selon l'une quelconque des revendications précédentes, se caractérisant par le fait que le circuit constitué par la double tubulure (2, 3) comporte une pompe électrique (19) accélérant le flux d'huile.

5. Système de vaporisation de gaz liquéfié selon l'une quelconque des revendications précédentes, se caractérisant par le fait que la double tubulure (2, 3) est reliée au circuit d'huile de graissage du moteur (5) par l'intermédiaire d'un élément de dérivation (4) constitué d'un bloc de fonte se montant à la base du filtre à huile (16) et comportant deux raccords communicants respectivement avec le carter du moteur et ledit filtre à huile.

## Claims

1. Vaporisation system of liquefied gas, heated by the lubricating oil of the engine, the object of which is to supply by means of liquefied petroleum gas (LPG) spark ignition engines that ordinarily receive a liquid fuel, and that can be adapted to all types of carburettor and fuel-injection type internal combustion engines comprising lubrication by oil circulation, said system comprising a vaporisation box (1) made up of a heat chamber (7), and a vaporisation chamber (6), linked to the liquefied gas tank (9) and to the carburettor (11) of the engine (5),
**characterised in that** the heat chamber (7) is heated jointly, on the one hand, by means of a double manifold (2, 3), by-pass connected to the lubricating oil system of the engine (5) and, on the other hand by an internal electrical resistance (17) fixed onto the inner surface of the cover (13) of the heat chamber, said resistance, linked to a source of current through a connector (18) mounted onto said cover, being capable of providing additional heat energy when necessary.

2. Liquefied gas vaporisation system according to claim 1, **characterised by** the fact that the source of current supplying the electrical resistance (17) is made up of the battery of the vehicle.

3. Liquefied gas vaporisation system according to any one of the previous claims, **characterised by** the fact that the electrical resistance (17) is switched on and off by a thermostat by-pass mounted onto the electrical power supply and controlling the temperature of the heat chamber (7).

4. Liquefied gas vaporisation system according to any one of the previous claims, **characterised by** the fact that the circuit made up of the double manifold (2, 3) comprises an electric pump (19) accelerating the flow of oil.

5. Liquefied gas vaporisation system according to any one of the previous claims, **characterised by** the fact that the double manifold (2, 3) is linked to the lubricating oil system of the engine (5) through a by-pass element (4) made up of a cast iron block that is mounted at the base of the oil filter (16) and comprising two couplings respectively communicating with the crankcase and said oil filter.

## Patentansprüche

1. Verdampfungssystem von Flüssiggas, das durch das Schmieröl vom Motor erwärmt wird, dessen Aufgabe in der Flüssiggasversorgung (GPL) von Verbrennungsmotoren besteht, die normalerweise einen flüssigen Kraftstoff aufnehmen, und das an alle internen Verbrennungsmotoren des Typs Ottomotor oder Einspritzmotor mit Umlaufschmierung angepasst werden kann; besagtes System verfügt über ein Verdampfungsgehäuse (1) bestehend aus einer Warmkammer (7) und einer Verdampfungskammer (6), die an den Flüssiggasbehälter (9) und den Vergaser (11) vom Motor (5) angeschlossen ist,
**dadurch gekennzeichnet, dass** die Heizung der Warmkammer (7) zweifach gewährleistet wird, einerseits über einen Doppelstutzen (2, 3), der durch ein Zweigleitungselement an den Schmierölkreislauf des Motors (5) angeschlossen ist, und andererseits über einen internen elektrischen Widerstand (17) an der Innenseite des Deckels (13) von der Warmkammer, wobei besagter Widerstand über einen auf o.g. Deckel montierten Verbinder (18) an eine Stromquelle angeschlossen wird, mit der Fähigkeit, im Bedarfsfall zusätzliche Wärmeenergie zuzuführen.

2. Verdampfungssystem von Flüssiggas nach Anspruch Nr. 1, **dadurch gekennzeichnet, dass** die Stromquelle, die den elektrischen Widerstand (17) versorgt, von der Batterie des Kraftfahrzeuges erzeugt wird.

3. Verdampfungssystem von Flüssiggas nach einem der vorhergehenden Ansprüche, **dadurch gekennzeichnet, dass** das Ein- und Ausschalten des elektrischen Widerstands (17) von einem Thermostat ausgeführt wird, das mittels einer Zweigleitung an der elektrischen Versorgung angeschlossen ist und die Temperatur der Warmkammer (7) kontrolliert.

4. Verdampfungssystem von Flüssiggas nach einem der vorhergehenden Ansprüche, **dadurch gekennzeichnet, dass** der aus dem Doppelstutzen (2, 3) bestehende Kreis über eine Elektropumpe (19) verfügt, die den Ölstrom beschleunigt.

5. Verdampfungssystem von Flüssiggas nach einem der vorhergehenden Ansprüche, **dadurch gekennzeichnet, dass** der Doppelstutzen (2, 3) an den Schmierölkreislauf vom Motor (5) durch ein Zweigleitungselement (4) angeschlossen ist, das aus einem gusseisernen Block besteht, der an der Basis des Ölfilters (16) montiert wird und über zwei Anschlüsse verfügt, die jeweils mit dem Motorgehäuse und dem o.g. Ölfilter verbunden sind.
